# EUROPÄISCHE PATENTSCHRIFT

(11) **EP 0 858 979 B1**
(45) Veröffentlichungstag und Bekanntmachung des Hinweises auf die Patenterteilung: **25.04.2001**
(21) Anmeldenummer: 98100465.8
(22) Anmeldetag: 13.01.1998
(51) Int. Cl.: C04B 7/43, F27B 7/20

(54) **Verfahren und Anlage zur Herstellung von Zementklinker**
Method and apparatus for producing cement clinker
Procédé et installation pour la production de clinker

(30) Priorität: 13.02.1997 DE 19705560
(43) Veröffentlichungstag der Anmeldung: 19.08.1998
(73) Patentinhaber: KRUPP POLYSIUS AG, 59269 Beckum (DE)
(72) Erfinder: Kreft, Wilfried, Dipl.-Ing., 59320 Ennigerloh (DE); Uhde, Martin, Dipl.-Ing., 59320 Ennigerloh (DE); Rother, Wolfgang, Dipl.-Ing., 59302 Oelde (DE)
(74) Vertreter: Tetzner, Michael, Dipl.-Ing.

(56) Entgegenhaltungen:
- EP-A- 0 754 924
- WO-A-96/00703
- DE-A- 4 219 697
- US-A- 4 402 754
- US-A- 4 507 153

## Beschreibung

Die Erfindung betrifft ein Verfahren (entsprechend dem Oberbegriff des Anspruches 1) sowie eine Anlage (entsprechend dem Oberbegriff des Anspruches 10) zur Herstellung von Zementklinker aus Zementrohmaterial.

Aus der DE-A-42 19 697 ist ein Verfahren zur Herstellung von Zementklinker bekannt, bei dem das aus einer Calcinierzone kommende, zumindest weitgehend calcinierte Material in einer unterteilten Klinkerbrennzone in einer ersten Stufe bis auf eine Temperatur nahe der Sintertemperatur aufgeheizt und in einer zweiten Stufe zu Klinker fertiggebrannt wird, wobei diese weitere Aufheizung des calcinierten Materiales bevorzugt in einem Sprudelbett erfolgt. Bei dieser Aufheizung im Sprudelbett soll gleichzeitig eine Aufbaugranulierung des calcinierten Materiales herbeigeführt werden.

Weiterhin sind aus der DE-A-32 37 343 ein Verfahren sowie eine Anlage zur Herstellung von Zementklinker bekannt. Dort ist zwischen der Calcinierzone und dem Klinkerbrennofen ein besonderes Aufheizaggregat für das calcinierte Material vorgesehen. Hierin wird eine schnelle Aufheizung des clacinierten Materiales angestrebt, was durch eine Vielzahl von Brennstoffzuführungen und/oder Verbrennungsluftzuführungen am Aufheizaggregat erzielt werden soll, um dadurch eine angepaßte Wärmedarbietung einstellen zu können. Das calcinierte Material soll auf die Temperatur der beginnenden Alitbildung, die im Mittel etwa bei 1.250 °C liegen kann, aufgeheizt werden, ohne jedoch dabei die Bildung von Schmelzeanteilen herbeizuführen. Als Aufheizaggregate können hier mehrere Ausführungsformen verwendet werden, wie z.B. ein senkrecht stehender schachtförmiger Suspensionsreaktor mit Rohrschleife und am Ende angeordneten Zyklonabscheider sowie ein Wirbelschichtreaktor mit überfließender Wirbelschicht.

Dieser bekannten Ausführung sind mehrere Nachteile anzulasten: Wenn das Aufheizaggregat als im wesentlichen senkrecht stehender schachtförmiger Suspensionsreaktor ausgebildet ist, dann ist er bevorzugt mit einer relativ großen Anzahl über die Schachthöhe verteilten von Brennstoff- und Luftzuführstellen versehen, wodurch sich neben einem entsprechend hohen konstruktiven Aufwand auch eine äußerst komplizierte Einstellung für das angestrebte homogene Temperaturprofil ergibt. Wenn hierin jedoch in der Nähe des oberen Temperaturbereichs gearbeitet wird, dann kann es mitunter doch nicht ganz vermieden werden, daß gewisse Teilschmelzen auftreten, was zumindest in dem als Abscheideeinrichtung verwendeten Zyklonabscheider aufgrund der reinen Fliehkraftabscheidung zu unerwünschten Materialanbackungen führen kann. Darüber hinaus arbeitet ein Zyklonabscheider mit verhältnismäßig hohem Druckverlust. Auch bei dem anstelle des schachtförmigen Suspensionsreaktors verwendbaren Wirbelschichtreaktor läßt sich ein entsprechend hoher baulicher Aufwand bei der Anzahl der Brennstoff- und Luftzuführstellen nicht vermeiden, zumal für eine gleichmäßige Verteilung von Brennstoff und Luft über den ganzen Querschnitt des Anströmbodens gesorgt werden muß. Wenn hier ebenfalls noch eine zusätzliche Trennstufe zum Abscheiden des aufgeheizten Materiales von den Behandlungsgasen vorgesehen wird, dann ergeben sich außerdem besonders hohe Druckverluste, wobei auch hier bei relativ hohen Arbeitstemperaturen eine verstärkte Neigung zur Ansatzbildung besteht. Soll dagegen die dem Aufheizaggregat nachgeordnete Trennstufe vermieden werden, dann wird der den Klinkerbrennofen bildende Drehrohrofen nicht im Gegenstrom, sondern im Gleichstrom zwischen Gas und Gut betrieben.

Der Erfindung liegt die Aufgabe zugrunde, ein Verfahren gemäß Oberbegriff des Anspruches 1 sowie eine Anlage gemäß Oberbegriff des Anspruches 10 in der Weise weiterzuentwickeln, daß das calcinierte Material unter Vermeidung von Ansatzbildungen sowie bei relativ geringem Druckverlust in der Aufheizzone (Aufheizeinrichtung) mit großer Zuverlässigkeit ausreichend weiter aufgeheizt werden kann.

Diese Aufgabe wird erfindungsgemäß zum einen durch die Verfahrensmerkmale gemäß Kennzeichen des Anspruches 1 und zum andern durch die Vorrichtungsmerkmale gemäß Kennzeichen des Anspruches 10 gelöst.

Vorteilhafte Ausgestaltungen und Weiterbildungen der Erfindung sind Gegenstand der Unteransprüche.

Die Erfindung geht von Überlegungen aus, den Prozeß zur Herstellung von Zementklinker aus Zementrohmaterial dadurch zu optimieren, daß der die Klinkerbrennzone (Sinterzone) enthaltende Brennofen von der Wärmeleistung her noch weiter entlastet wird, d.h. einen Teil der Wärmearbeit dieses Brennofens zu entkoppeln, was sich besonders deutlich bei der Verwendung eines Drehrohrofens auswirkt. Die Klinkerbrennzone und dementsprechend auch der Klinkerbrennofen dienen dabei lediglich noch der reinen Sinterarbeit, während die zwischen Calcinierzone und Klinkerbrennzone vorgesehene Aufheizzone dem Aufheizen des calcinierten oder zumindest weitgehend calcinierten Materiales bis in die Nähe der Sintertemperatur, jedoch unterhalb der Schmelzphasenbildung dient. Dies bedeutet somit, daß in der Aufheizzone bzw. Aufheizeinrichtung das aus der Calcinierzone/Calciniereinrichtung kommende calcinierte Material (Zementrohmehl) zunächst noch einer restlichen Entsäuerung unterworfen wird, sofern das zuvor calcinierte Material nicht bereits restlos entsäuert ist, bevor es dann bis auf eine Temperatur erhitzt wird, bei der möglichst noch keine Schmelzphase auftritt. Die erste Schmelzphase tritt erst zu Beginn der Klinkerbrennzone (Klinkerbrennofen) - in Abhängigkeit von der Materialzusammensetzung - bei etwa 1.240 °C auf, wo etwa die Agglomeration der Brenngutteilchen untereinander und die weitere Sinterung zu Klinker bei der weiteren Materialerhitzung stattfindet. In der Aufheizzone erfolgt somit - nach einer evtl. Restentsäuerung bzw. Restcalcinierung - gewissermaßen eine Vorsinterung bzw. Presinterung des calcinierten Materiales, von der die Klinkerbrennzone bzw. der entsprechende Klinkerbrennofen entlastet wird.

Bei dem erfindungsgemäßen Verfahren wird dementsprechend so vorgegangen, daß der nach Art einer Flugstrom-Behandlungszone bzw. -Reaktionszone betriebenen Aufheizzone im Bereich der unteren Streckenhälfte der aufsteigenden ersten Behandlungsstrecke neben dem calcinierten Material jeweils an nur einer Stelle der Brennstoffanteil und ausschließlich die Abluft-Teilmenge aus der Kühlzone als Verbrennungsluft zugeführt werden. Dabei wird ferner das weiter aufgeheizte Material in der Abscheidestufe dieser Aufheizzone im wesentlichen durch Schwerkraftwirkung mit überlagerter Fliehkraftwirkung aus dem Behandlungsgasstrom ausgeschieden und dann direkt in die Klinkerbrennzone eingeführt.

In einer solchen Flugstrom-Behandlungszone (als Aufheizzone) ergibt sich gewissermaßen eine besonders große Raum-Zeit-Ausbeute, was auf relativ hohe Gasgeschwindigkeiten (beispielsweise im Bereich von 15 bis 30 m/s) und auf eine relativ kurze Verweilzeit des calcinierten Materiales im Behandlungsgasstrom (beispielsweise weniger als etwa 3 Sekunden) zurückzuführen ist, wobei diese Gasverweilzeit jedoch ausreichend ist für eine optimale Energieübertragung auf das feste, pulver- bzw. mehlförmige Rohmaterial. Die Reaktionstemperatur in dieser als Flugstrom-Behandlungszone betriebenen Aufheizzone läßt sich infolge der hohen Feststoffauflösung und Durchmischung in dieser Behandlungszone sehr leicht und einfach einstellen und steuern, so daß die gewünschte ausreichende weitere Aufheizung des calcinierten Materiales mit großer Zuverlässigkeit gewährleistet werden kann. Hierbei wirkt sich auch die Tatsache aus, daß das calcinierte Material, der entsprechende Brennstoffanteil und die Abluft-Teilmenge aus der Kühlzone (als Verbrennungsluft) in der unteren Streckenhälfte der aufsteigenden ersten Behandlungsstrecke der Aufheizzone zugeführt werden. Bei der Energiefreisetzung durch die Brennstoffverbrennung ergeben sich weitere Vorteile dadurch, daß die Verbrennungsprodukte relativ schnell von der Brennstoffoberfläche abgeführt werden und so der Ausbrand rasch und vollständig erfolgen kann. Die hierbei freigesetzte Energie wird spontan auf Gas und Feststoff übertragen, die die Wärmesenke darstellen, wobei es sich um eine "flammenlose Verbrennung" handelt, die im Gegensatz zu einer "offenen Verbrennung" Temperaturspitzen und Überhitzungen vermeidet. Dies ist insbesondere dann von Vorteil, wenn die Gefahr besteht, daß im Überhitzungsfall auf der Oberfläche des aufzuheizenden Materiales Teilschmelzen oder teigige Phasen entstehen können, die zu Ansatzbildungen an den Wandungen der Behandlungszone führen würden.

Im Zusammenhang mit dieser vorteilhaften weiteren Aufheizung des calcinierten Materiales in einer Flugstrom-Behandlungszone wirkt sich ferner die Art und Weise der Abscheidung des weiter aufgeheizten Materiales aus dem Behandlungsgasstrom aus, wie es erfindungsgemäß vorgeschlagen wird, d.h. dieses Material wird in der Abscheidestufe vom Behandlungsstrom im wesentlichen durch Schwerkraftwirkung abgeschieden, die von einer nur relativ geringen Fliehkraftwirkung überlagert wird. Vergleicht man diese Art der Materialabscheidung mit einer Abscheidung in einem Zyklonabscheider, in dem also eine reine Fliehkraftabscheidung mit relativ großen, auf die erhitzten Teilchen einwirkenden Fliehkräften erfolgt, dann geschieht die erfindungsgemäß vorgeschlagene Materialabscheidung mit einem relativ geringen Druckverlust (und somit einem relativ geringen Energieverlust), und zum andern wird der große Vorteil erzielt, daß Anbakkungen an den Wänden im eigentlichen Abscheidebereich mit großer Zuverlässigkeit vermieden werden können.

Bei dem erfindungsgemäßen Verfahren wird das aus der Vorwärmzone kommende, vorgewärmte Material (Zementrohmehl) in der Calcinierzone auf etwa 850 bis 900 °C weiter erhitzt und dabei zumindest weitgehend calciniert (mit einem Entsäuerungsgrad von mindestens etwa 87 bis 97 %). Wenn dabei das aus der Calcinierzone kommende Material noch nicht vollkommen calciniert sein sollte, dann wird es - wie bereits weiter oben angedeutet - in der Aufheizzone zunächst in einer ersten Aufheizphase fertig calciniert, woraufhin dann die weitere Aufheizung auf die gewünschte Temperatur bis kurz unterhalb der Schmelzphasenbildung in einer Vorsinterphase auf den Bereich von etwa 1.200 °C erfolgt. Diese Vorsinter- bzw. Presinterphase wird so gesteuert, daß möglichst keine Agglomeratbildung auftritt. In diesem Temperaturbereich von etwa 1.200 °C wird auch der größte Anteil an schweren flüchtigen Schwefelverbindungen noch nicht flüchtig werden, sondern dies geschieht erst in der nachfolgenden Klinkerbrennzone, wodurch eine verbesserte Abzugsmöglichkeit dieser flüchtigen Verbindungen durch eine gezieltere Bypass-Gestaltung ermöglicht wird.

Bei diesem erfindungsgemäßen Verfahren erweist sich eine sinnvolle Aufteilung des Gesamtbrennstoffes und der anteiligen Verbrennunsgase bzw. Verbrennungsluft auf die Klinkerbrennzone, die Aufheizzone und die Calcinierzone als besonders vorteilhaft, wenn von dem gesamten Verbrenngase-Brennstoff-Bedarf in relativ zueinander einstellbarer Weise - in Volumen-% - etwa 20 % bis 30 % (vorzugsweise etwa 20 %) der Klinkerbrennzone, etwa 40 bis 50 % (vorzugsweise weniger als etwa 50 %) der Flugstrom-Behandlungszone bzw. Aufheizzone und etwa 30 bis 40 % (vorzugsweise mehr als etwa 30 %) der Calcinierzone zugeführt werden, wobei zumindest der Hauptanteil der erwärmten Abgase bzw. Abluft aus der Kühlzone - in Form von Abluft-Teilmengen - als Verbrennungsgase/Verbrennungsluft verwendet werden.

Erfindungsgemäß wird ferner der Klinkerbrennzone zweckmäßig relativ hochwertiger Brennstoff zugeführt, während der Aufheizzone und der Calcinierzone relativ minderwertige, kostengünstige Sekundärbrennstoffe zugeführt werden können. Gerade bei der erfindungsgemäß nach Art einer Flugstrom-Behandlungszone betriebenen Aufheizzone erweist es sich als besonders günstig, teilweise oder evtl. sogar ausschließlich diese Sekundär- bzw. Alternativbrennstoffe zu verbrennen, zumal es als relativ einfache Baumaßnahme angesehen werden kann, die Länge der Ausbrennzeit dieser Sekundärbrennstoffe durch eine entsprechende Länge der Behandlungs- bzw. Reaktionsstrecken in der Aufheizzone zu verändern und anzupassen.

Wie bereits weiter oben angedeutet worden ist, erweist es sich bei diesem erfindunsgemäßen Verfahren als besonders vorteilhaft, wenn als Klinkerbrennzone ein im Gegenstrombetrieb arbeitender, relativ kurzer Drehrohrofen verwendet wird, dessen Abgase unter Umgehung der Aufheizzone/Flugstrom-Behandlungszone in die Calcinierzone eingeleitet werden.

Es wird außerdem vorteilhaft sein, wenn das in der Aufheizzone weiter aufgeheizte Material in der Klinkerbrennzone auf einen Freikalkgehalt von < 1 % gebrannt wird.

Die Anlage zur Herstellung von Zementklinker aus Zementrohmaterial zeichnet sich erfindungsgemäß dadurch aus, daß zum einen an die untere Streckenhälfte der aufsteigenden ersten Behandlungsstrecke der nach Art eines Flugstrom-Reaktors ausgeführten Aufheizeinrichtung eine Zuführleitung für calciniertes Material sowie an jeweils einer einzigen Stelle eine Brennstoffzuführung und eine Kühlerabluft-Teilleitung als einzige Verbrennungsluftzuführung angeschlossen sind, und daß dabei zum andern die Abscheideeinrichtung der Aufheizzone wenigstens einstufig derart ausgebildet ist, daß das weiter aufgeheizte Material im wesentlichen durch Schwerkraftabscheidung mit überlagerter Fliehkraftwirkung aus dem Behandlungsgasstrom abtrennbar ist.

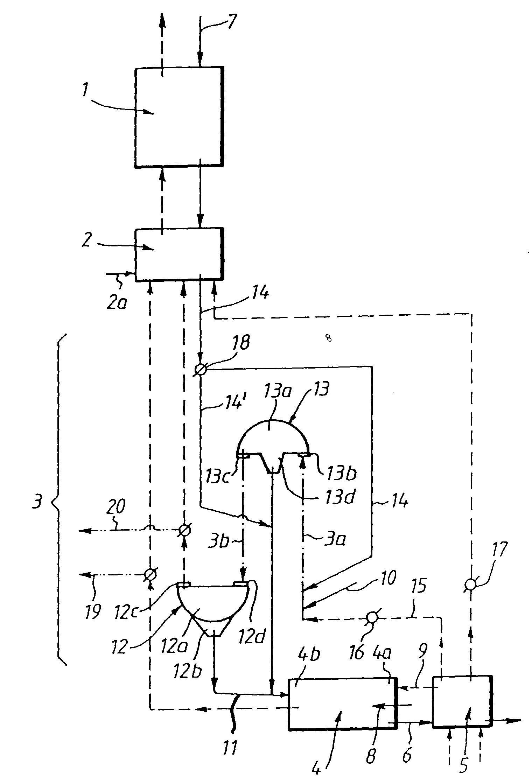

Die Erfindung sei nachfolgend anhand der Zeichnung noch näher erläutert, die ein vereinfachtes Fließschema der erfindungsgemäßen Anlage veranschaulicht, die sich besonders gut zur Durchführung des erfindungsgemäßen Verfahrens eignet.

Die in der Zeichnung veranschaulichte Zementklinker-Herstellungsanlage enthält - in der Hauptfließrichtung des durch durchgehende Linien und Pfeile angedeuteten Materiales betrachtet - einen vorzugsweise durch einen Zyklonvorwärmer 1 gebildeten Vorwärmer (= Vorwärmzone), eine in üblicher und geeigneter Weise ausgebildete Calciniereinrichtung (= Calcinierzone) 2, eine Aufheizeinrichtung (= Aufheizzone) 3, die - wie später noch im einzelnen erläutert wird - nach Art eines Flugstromreaktors ausgeführt ist, ferner einen durch einen Drehrohrofen 4 gebildeten Klinkerbrennofen sowie einen diesem Drehrohrofen 4 nachgeschalteten Kühler 5, der zum Abkühlen des aus dem Drehrohrofen 4 kommenden gebrannten Klinkers (Pfeil 6) dient und in jeder geeigneten, an sich bekannten Weise ausgeführt sein kann, beispielsweise als Rostkühler oder dgl..

Bevor auf die einzelnen Einrichtungen und Zonen näher eingegangen wird, sei darauf hingewiesen, daß in dem veranschaulichten Anlagen-Fließschema die Gasströme bzw. Gasleitungen durch gestrichelte Linien und Pfeile und die Gas-Material-Suspensionsleitungen/-ströme durch strichpunktierte Linien und Pfeile angedeutet sind, während die Materialleitungen bzw. Materialströme - wie bereits erwähnt - durch durchgehende Linien und Pfeile angedeutet sind.

Dementsprechend ist in dem Fließschema zu erkennen, daß der Zyklonvorwärmer 1 zwecks Vorwärmung des aufgegebenen Rohmateriales (Zementrohmehl) - entsprechend Pfeil 7 - von heißen Gasen nach oben durchströmt wird. Diese heißen Abgase stammen aus der Calciniereinrichtung 2, in der das vorgewärmte Rohmaterial zumindest weitgehend bzw. zumindest nahezu vollkommen calciniert (entsäuert) wird. Diese Calciniereinrichtung 2 wird einerseits mit Verbrennungsluft (sauerstoffreichen Abgasen) aus der Aufheizeinrichtung 3, mit heißen Abgasen aus dem Drehrohrofen 4 sowie mit zusätzlichem Brennstoff (Pfeil 2a) versorgt, bei dem es sich um einen entsprechenden Anteil (etwa 30 bis 40 Vol.-%, vorzugsweise mehr als etwa 30 Vol.-%) des Gesamt-Brennstoffbedarfs der Anlage handelt.

Der Drehrohrofen 4, der die Klinkerbrennzone bildet, wird in an sich bekannter Weise im Gegenstrom zwischen Material und Behandlungsgas betrieben, wobei er an seinem Klinker-Austrittsende 4a Brennstoff- und Verbrennungsluft-Zuführungen entsprechend dem durchgehenden Pfeil 8 bzw. dem gestrichelten Pfeil 9 aufweist. Dem Drehrohrofen 4 wird bevorzugt relativ hochwertiger Brennstoff - in einem Anteil von etwa 20 bis 30 Vol.-%, vorzugsweise etwa 20 Vol.-% des gesamten Brennstoffbedarfs - zugeführt.

Im Kühler 5 wird der heiße Klinker in üblicher Weise mit Hilfe von an mehreren Stellen zugeführter Kühlluft abgekühlt, wobei die aus diesem Klinker 5 abgeleitete heiße Abluft - wie durch gestrichelte Linien angedeutet - über Abluft-Teilleitungen als Verbrennungsluft-Teilmengen dem Drehrohrofen 4, der Aufheizeinrichtung 3 und der Calciniereinrichtung 2 zugeführt wird.

Die Aufheizeinrichtung 3 wird nicht nur mit Verbrennungsluft sondern auch mit Brennstoff versorgt, der gemäß Pfeil 10 zugeführt wird und bei dem es sich um einen weiteren Anteil des gesamten Brennstoffbedarfs der Anlage handelt, und zwar um einen Anteil von etwa 40 bis 50 Vol.-%, vorzugsweise weniger als etwa 50 Vol.-%. Somit ist der gesamte Verbrennungsgase-Brennstoff-Bedarf der Anlage bzw. des entsprechenden Verfahrens auf drei Zonen (4, 3, 2) in zweckmäßiger Weise aufgeteilt.

Wie bereits weiter oben erläutert worden ist, kommt der Ausbildung der Aufheizzone bzw. Aufheizeinrichtung 3 bei der erfindungsgemäßen Anlage und dem damit durchführbaren Verfahren eine besondere Bedeutung zu.

Diese Aufheizeinrichtung 3 ist nun generell mit aufsteigenden und absteigenden Behandlungsstrecken sowie einer Abscheideeinrichtung ausgestattet, die über eine Material-Abführleitung 11 an das Eintragsende 4b des Drehrohrofens 4 angeschlossen ist. Diese Aufheizeinrichtung 3 ist nach Art eines Flugstromreaktors (= Flugstrom-Behandlungszone/-Reaktionszone) ausgeführt und enthält - wie strichpunktiert angedeutet - eine aufsteigende erste Behandlungstrecke (Reaktionsstrecke) 3a, eine absteigende zweite Behandlungstrecke (Reaktionsstrecke) 3b sowie eine zumindest einstufige Abscheideeinrichtung; im veranschaulichten Anlagenbeispiel enthält die Abscheidezone zwei Abscheidestufen, nämlich eine untere Abscheidestufe 12 und eine zusätzliche obere Abscheidestufe 13.

An die untere Streckenhälfte, vorzugsweise am unteren Endabschnitt - wie im Fließschema veranschaulicht - der aufsteigenden ersten Behandlungsstrecke 3a der Aufheizeinrichtung 3 sind die Anschlußstellen für die Zuführleitung 14 des calcinierten Materiales, die Brennstoffzuführung (Pfeil 10) und die Kühlluft-Teilleitung 15 gesondert voneinander angeordnet, wobei die Kühlerabluft-Teilleitung bzw. Tertiärluftleitung 15 als einzige Verbrennungsluftzuführung für die Aufheizeinrichtung 3 vorgesehen ist.

Jede Abscheidestufe 12, 13 der Abscheideeinrichtung in der Aufheizeinrichtung 3 ist nun generell so ausgebildet, daß das weiter aufgeheizte Material im wesentlichen durch Schwerkraftabscheidung mit überlagerter (geringer) Fliehkraftwirkung aus dem Behandlungsgasstrom abgetrennt wird. Betrachtet man dazu die am Ende der eigentlichen Aufheizzone (Aufheizeinrichtung 3) vorgesehene untere Abscheidestufe 12, dann kann man selbst bei der schematischen Darstellung des Fließschemas erkennen, daß die absteigende zweite Behandlungsstrecke 3b mit ihrem unteren Ende von oben her in einen räumlich erweiterten Umlenkabschnitt 12a der unteren Abscheidestufe 12 einmündet, die durch eine Art Umlenkabscheider gebildet wird, der ferner einen unteren Abführtrichter 12b für das im wesentlichen durch Schwerkraft abgeschiedene aufgeheizte Material sowie einen oberen Gasabführanschluß 12c für vom Material abgetrenntes Behandlungsgas aufweist. Hierbei schließt der Umlenkabschnitt 12a einen Bogen von wenigstens etwa 120° ein, wobei entsprechend der schematischen Darstellung im Fließschema der Bogen so groß ist, daß der Behandlungsgasstrom in dieser unteren Abscheidestufe 12 um etwa 180° umgelenkt wird, so daß das weitgehend von Material befreite Behandlungsgas nach oben in Richtung der Calciniereinrichtung 2 weiterströmen kann. Dementsprechend sind der Einmündungsanschluß 12d der zweiten Behandlungsstrecke 3b und der Abführanschluß 12c an den einander entgegengesetzten, im wesentlichen nach oben gerichteten Enden des Bogens dieses Umlenkabschnittes 12a vorgesehen. Erwähnt sei noch, daß der räumlich erweiterte Umlenkabschnitt 12a einen erweiterten Abscheideteil derart bildet, daß dort im wesentlichen die Schwerkraftabscheidung des aufgeheizten Materiales aus dem Behandlungsgasstrom stattfindet.

Nach dem gleichen Prinzip wie die untere Abscheidestufe 12 arbeitet im wesentlichen auch die obere Abscheidestufe 13, die die oberen Enden der aufsteigenden ersten Behandlungsstrecke 3a und der absteigenden zweiten Behandlungstrecke 3b verbindet und dementsprechend durch einen zweiten Abscheider etwa in Form eines Umlenkabscheiders gebildet wird. Im Unterschied zu der unteren Abscheidestufe 12 dient die obere Abscheidestufe 13 jedoch dazu, die in der ersten Behandlungsstrecke 3a aufsteigende Behandlungsgas-Material-Suspension um etwa 180° in die absteigende zweite Behandlungsstrecke 3b umzulenken und dabei gleichzeitig einen entsprechenden Anteil aufgeheizten Materiales (im allgemeinen einen gröberen Materialanteil) abzuscheiden. Die obere Abscheidestufe 13 enthält dementsprechend einen einen oberen Umlenkbogen von etwa 180° aufweisenden, räumlich erweiterten Umlenkabschnitt 13a mit nach unten gerichteten Anschlüssen 13b, 13c für die beiden Behandlungsstrecken 3a bzw. 3b sowie mit einem unteren Material-Auslaßtrichter 13d, der mit der Material-Abführleitung 11 und somit mit dem Eintragsende 4b des Drehrohrofens 4 verbunden ist.

Bei diesem Ausführungsbeispiel wird somit in der Verbindung zwischen der aufsteigenden ersten Behandlungsstrecke 3a und der absteigenden zweiten Behandlungsstrecke 3b der Aufheizeinrichtung 3 eine erste Teilabscheidung in der oberen Abscheidestufe 13 mit einer Strömungsumlenkung von etwa 180° und am unteren Ende der absteigenden Behandlungsstrecke 3b eine weitere Materialabscheidung (Hauptabscheidung) in der unteren Abscheidestufe 12 vorgenommen, wobei das abgeschiedene aufgeheizte Material beider Abscheidestufen direkt in den Drehrohrofen 4 eingeführt und der vom aufgeheizten Material abgetrennte Behandlungsgasstrom bei im wesentlichen aufwärts gerichteter Gasströmung der Calciniereinrichtung 2 zugeführt werden. Dabei kann es auch vorgezogen werden, diesen aufsteigenden Behandlungsgasstrom zuvor mit den ebenfalls aufwärtsströmenden Abgasen aus dem Drehrohrofen 4 zusammenzuführen.

Was die bauliche Ausführung der beiden Behandlungsstrecken 3a, 3b der Aufheizeinrichtung 3 anbelangt, so können diese durch geeignete rohrförmige Behandlungskanäle gebildet sein, wobei - wie im Fließbild rein schematisch angedeutet - in das untere Ende der aufsteigenden ersten Behandlungsstrecke 3a bzw. des diese bildenden Behandlungskanales die zugehörige Kühlluft-Teilleitung 15 direkt einmündet, während über dieser Mündungsstelle die Anschlußstelle für die Zuführleitung 14 des calcinierten Materiales und die Brennstoffzuführung 10 angeordnet sind.

Wie bei 16 und 17 angedeutet ist, können in den Kühlluft-Teilleitungen Einstellklappen bzw. -ventile vorgesehen sein, um die entsprechenden Kühlluft-Teilmengen einstellen zu können.

Es kann ferner auch von Vorteil sein, wenn in der von der Calciniereinrichtung 2 zur Aufheizeinrichtung 3 führenden Material-Zuführleitung 14 eine Zweiwege-Weiche 18 angeordnet ist, deren erster Weg (Zuführleitung 14) mit der ersten Behandlungsstrecke 3a der Aufheizeinrichtung 3 und deren zweiter Weg über eine Umgehungsleitung 14' mit dem Eintragsende 4b des Drehrohrofens 4 verbunden ist. Hierdurch kann das calcinierte Material in einer ersten Anfahrphase der Anlage unter Umgehung der Aufheizeinrichtung 3 zunächst direkt in den Drehrohrofen 4 eingeführt werden.

Bei dieser erfindungsgemäßen Anlage bzw. dem erfindungsgemäßen Verfahren ist ferner die Möglichkeit vorgesehen, unerwünschte flüchtige Bestandteile durch wenigstens eine einstellbare Bypass-Führung aus den Abgasen des Drehrohrofens 4 und/oder der Aufheizzone 3 abzuziehen. Wenn somit beim Brennen bzw. beim Aufheizen des calcinierten Materiales unerwünschte flüchtige Bestandteile auftreten, die sich im Kreislauf stetig anreichern können, dann kann einerseits - wie bei 19 durch Strich-Punkt-Punkt-Linien angedeutet - eine einstellbare Teilmenge der aus dem Drehrohrofen (Klinkerbrennzone) 4 abströmenden Abgase, einerseits, und - wie bei 20 durch Strich-Punkt-Punkt-Linien angedeutet - aus dem von der unteren Abscheidestufe 12 der Aufheizeinrichtung 3 zur Calciniereinrichtung 2 strömenden Gasstrom ebenfalls eine abgemessene Teilmenge jeweils im Bypass abgeleitet werden. Hierdurch können unerwünschte flüchtige Bestandteile, wie z.B. Alkali, Alkali-Chloride oder Alkali-Sulfate durch wenigstens eine der Bypass-Führungen 19 und/oder 20 entsprechend den jeweiligen verfahrenstechnischen Notwendigkeiten gezielt abgezogen werden.

Es sei schließlich noch darauf hingewiesen, daß die in dem Fließschema veranschaulichte Anlage gemäß der Erfindung nicht unbedingt mit einer zweistufigen Abscheideeinrichtung, sondern entsprechend den jeweiligen Betriebsverhältnissen im Bedarfsfalle auch mit nur einer einzigen Abscheidestufe, dann aber nur mit der unteren Abscheidestufe 12, betrieben werden kann. In einem solchen Falle würde anstelle der oberen Abscheidestufe 13 - wie sich leicht ohne gesonderte zeichnerischen Darstellung vorstellen läßt - lediglich ein entsprechend gestalteter Krümmungsabschnitt, etwa in Form eines Rohrkrümmers oder dgl., die oberen Enden der beiden Behandlungsstrecken 3a und 3b miteinander verbinden.

## Patentansprüche

1. Verfahren zur Herstellung von Zementklinker aus Zementrohmaterial, wobei das Rohmaterial in einer Vorwärmzone vorgewärmt, anschließend in einer Calcinierzone calciniert, das calcinierte Material in einer aufsteigende und absteigende Behandlungsstrecken sowie wenigstens eine Abscheidestufe enthaltenden Aufheizzone auf eine Temperatur etwa vor Beginn der Schmelzphasenbildung weiter aufgeheizt, das aufgeheizte Material in einer Klinkerbrennzone zu Klinker fertiggebrannt und anschließend der heiße Klinker in einer Kühlzone abgekühlt wird, wobei Teilmengen der heißen Abluft aus der Kühlzone als Verbrennungsluft zusammen mit Brennstoffanteilen der Klinkerbrennzone, der Aufheizzone und der Calcinierzone zugeführt werden,
dadurch gekennzeichnet,
daß der nach Art einer Flugstrom-Behandlungszone betriebenen Aufheizzone (3) im Bereich der unteren Streckenhälfte der aufsteigenden ersten Behandlungsstrecke (3a) neben dem calcinierten Material jeweils an nur einer Stelle der Brennstoffanteil (10) und ausschließlich die Abluft-Teilmenge (15) aus der Kühlzone (5) als Verbrennungsluft zugeführt werden, wobei das weiter aufgeheizte Material in der Abscheidestufe (12, 13) dieser Aufheizzone im wesentlichen durch Schwerkraftwirkung mit überlagerter Fliehkraftwirkung aus dem Behandlungsgasstrom ausgeschieden und dann direkt in die Klinkerbrennzone (4) eingeführt wird.

2. Verfahren nach Anspruch 1, dadurch gekennzeichnet, daß das in der Calcinierzone (2) auf etwa 850 bis 900 °C erhitzte und calcinierte Material in der Aufheizzone (3) auf einen Temperaturbereich von etwa 1.200 °C aufgeheizt wird.

3. Verfahren nach Anspruch 1, dadurch gekennzeichnet, daß der mit dem calcinierten Material beladene Behandlungsgasstrom in der (jeder) Abscheidestufe (12, 13) der Aufheizzone (3) bogenförmig um wenigstens 120°, vorzugsweise im Bereich von etwa 180° umgelenkt wird, wobei das Material im Bereich dieser Umlenkung in einem erweiterten Abscheideteil im wesentlichen durch Schwerkraftwirkung aus dem Behandlungsgasstrom abgeschieden wird.

4. Verfahren nach Anspruch 3, dadurch gekennzeichnet, daß in der Verbindung zwischen der aufsteigenden ersten Behandlungsstrecke (3a) und der absteigenden zweiten Behandlungsstrecke (3b) der Aufheizzone (3) eine Teilmaterialabscheidung in einer oberen Abscheidestufe (13) mit einer Strömungsumlenkung von etwa 180° und am unteren Ende der zweiten Behandlungsstrecke eine weitere Materialabscheidung in einer unteren Abscheidestufe (12) vorgenommen wird, wobei das abgeschiedene, aufgeheizte Material beider Abscheidestufen in die Klinkerbrennzone (4) eingeführt und der vom aufgeheizten Material abgetrennte Behandlungsgasstrom bei im wesentlichen aufwärts gerichteter Gasströmung der Calcinierzone (2) zugeführt, vorzugsweise zuvor mit den ebenfalls aufwärtsströmenden Abgasen aus dem Klinkerbrennofen (4) zusammengeführt wird.

5. Verfahren nach Anspruch 1, dadurch gekennzeichnet, daß von dem gesamten Verbrennungsgas-Brennstoff-Bedarf in relativ zueinander einstellbarer Weise - in Volumen-% - etwa 20 bis 30 %, vorzugsweise etwa 20 %, der Klinkerbrennzone (4), etwa 40 bis 50 % der Aufheizzone (3) und etwa 30 bis 40 % der Calcinierzone (2) zugeführt werden, wobei zumindest der Hauptanteil der aufgewärmten Abgase aus der Kühlzone (5) als Verbrennungsgase verwendet werden.

6. Verfahren nach Anspruch 5, dadurch gekennzeichnet, daß der Klinkerbrennzone (4) relativ hochwertiger Brennstoff zugeführt wird, während der Aufheizzone (3) und der Calcinierzone (2) relativ minderwertige, kostengünstige Sekundärbrennstoffe zugeführt werden.

7. Verfahren nach Anspruch 1, dadurch gekennzeichnet, daß als Klinkerbrennzone ein im Gegenstrom arbeitender, relativ kurzer Drehrohrofen (4) verwendet wird, dessen Abgase unter Umgehung der Aufheizzone (3) in die Calcinierzone (2) eingeleitet werden.

8. Verfahren nach Anspruch 7, dadurch gekennzeichnet, daß unerwünschte flüchtige Bestandteile durch wenigstens eine einstellbare Bypass-Führung (19, 20) aus den Abgasen des Drehrohrofens (4) und/oder der Aufheizzone (3) abgezogen werden.

9. Verfahren nach Anspruch 1, dadurch gekennzeichnet, daß das aufgeheizte Material in der Klinkerbrennzone (4) auf einen Freikalkgehalt von < 1% gebrannt wird.

10. Anlage zur Herstellung von Zementklinker aus Zementtrohmaterial, enthaltend
a) einen von heißen Gasen durchströmten Vorwärmer (1) zur Vorwärmung des Rohmateriales,
b) eine mit Verbrennungsluft und zusätzlichem Brennstoff versorgte Calciniereinrichtung (2) zum Calcinieren des vorgewärmten Materiales,
c) eine ebenfalls mit Verbrennungsluft und Brennstoff versorgte Aufheizeinrichtung (3), die aufsteigende und absteigende Behandlungsstrecken (3a, 3b) sowie eine Abscheideeinrichtung (12, 13) aufweist, die über eine Materialabführleitung (11) an einen Brennofen (4) angeschlossen ist,
d) einen im Gegenstrom zwischen Material und Behandlungsgas betriebenen Klinkerbrennofen (4), an dessen Klinker-Austrittsende (4a) Brennstoff- und Verbrennungsluft-Zuführungen (8, 9) vorgesehen sind,
e) einen mit dem Klinkerbrennofen (4) verbundenen Kühler (5) zum Abkühlen des gebrannten Klinkers (6), wobei
f) der Kühler durch Abluft-Teilleitungen mit dem Klinkerbrennofen (4), der Aufheizeinrichtung (3) und der Calciniereinrichtung (2) verbunden ist,
gekennzeichnet durch folgende Merkmale:
g) an die untere Streckenhälfte der aufsteigenden ersten Behandlungsstrecke (3a) der nach Art eines Flugstromreaktors ausgeführten Aufheizeinrichtung (3) sind eine Zuführleitung (14) für calciniertes Material sowie an jeweils einer einzigen Stelle eine Brennstoffzuführung (10) und eine Kühlerabluft-Teilleitung (15) als einzige Verbrennungsluft-Zuführung angeschlossen;
h) die Abscheideeinrichtung der Aufheizeinrichtung (3) ist wenigstens einstufig derart ausgebildet, daß das weiter aufgeheizte Material im wesentlichen durch Schwerkraftabscheidung mit überlagerter Fliehkraftwirkung aus dem Behandlungsgasstrom abtrennbar ist.

11. Anlage nach Anspruch 10, dadurch gekennzeichnet, daß die Anschlußstellen für die Zuführleitung (14) des calcinierten Materiales, der Brennstoffzuführung (10) und der Kühlluft-Teilleitung (15) gesondert voneinander am unteren Endabschnitt der aufsteigenden ersten Behandlungsstrecke (3a) der Aufheizeinrichtung (3) angeordnet sind.

12. Anlage nach Anspruch 10, dadurch gekennzeichnet, daß die absteigende zweite Behandlungsstrecke (3b) mit ihrem unteren Ende etwa von oben her in einen räumlich erweiterten Umlenkabschnitt (12a) einer unteren Abscheidestufe (12) einmündet, die einen unteren Abführtrichter (12b) für im wesentlichen durch Schwerkraft abgeschiedenes aufgeheiztes Material und einen Gasabführanschluß (12c) für vom Material abgetrenntes Behandlungsgas aufweist, wobei der Umlenkabschnitt einen Bogen von wenigstens etwa 120° einschließt und wobei der Einmündungsanschluß (12d) der zweiten Behandlungsstrecke (3b) und der Gasabführanschluß (12c) an den einander entgegengesetzten, im wesentlichen nach oben gerichteten Enden des Bogens vorgesehen sind.

13. Anlage nach Anspruch 12, dadurch gekennzeichnet, daß die oberen Enden der aufsteigenden ersten Behandlungsstrecke (3a) und der absteigenden zweiten Behandlungsstrecke (3b) durch eine zusätzliche obere Abscheidestufe (13) verbunden sind, die einen einen oberen Umlenkbogen von etwa 180° aufweisenden, räumlich erweiterten Umlenkabschnitt (13a) mit nach unten gerichteten Anschlüssen (13b, 13c) für die beiden Behandlungsstrecken sowie mit einem unteren Materialauslaßtrichter (13d) enthält, der über eine Materialleitung mit dem Eintragsende (4a) des Klinkerbrennofens (4) verbunden ist.

14. Anlage nach Anspruch 12, dadurch gekennzeichnet, daß die beiden Behandlungsstrecken (3a, 3b) der Aufheizeinrichtung (3) durch rohrförmige Behandlungskanäle gebildet sind, wobei in das untere Ende der aufsteigenden ersten Behandlungsstrecke (3a) die zugehörige Kühlluft-Teilleitung (15) direkt einmündet, während über dieser Einmündungsstelle die Anschlußstellen für die Zuführleitung (14) des calcinierten Materiales und die Brennstoffzuführung (10) angeordnet sind.

15. Anlage nach Anspruch 10, dadurch gekennzeichnet, daß in den Teilleitungen Mengen-Einstellklappen vorgesehen sind.

16. Anlage nach Anspruch 10, dadurch gekennzeichnet, daß in der von der Calciniereinrichtung (2) zur Aufheizeinrichtung (3) führenden Material-Zuführleitung (14) eine Zweiwege-Weiche (18) angeordnet ist, deren erster Weg mit der Aufheizeinrichtung (3) und deren zweiter Weg über eine Umgehungsleitung (14') mit dem Eintragsende (4b) des Klinkerbrennofens (4) verbunden ist.

17. Anlage nach Anspruch 10, dadurch gekennzeichnet, daß der Klinkerbrennofen durch einen relativ kurzen Drehrohrofen (4) gebildet wird.

## Claims

1. Method for producing cement clinker from cement raw material, wherein the raw material is preheated in a preheating zone, is subsequently calcined in a calcining zone, the calcined material is further heated to a temperature approximately below the start of the molten phase formation in a heating zone which contains ascending and descending processing segments and at least one separation stage, the heated material is completely burned in a clinker combustion zone to form clinker and, subsequently, the hot clinker is cooled in a cooling zone, wherein portions of the hot exhaust air from the cooling zone are supplied, together with quantities of fuel, as combustion air to the clinker combustion zone, the heating zone and the calcining zone, characterised in that, besides the calcined material, the fuel quantity (10) and only the portion of exhaust air (15) from the cooling zone (5) are supplied at only one respective location as combustion air to the heating zone (3), which is operated in the manner of an airborne stream processing zone, in the region of the lower half of the ascending first processing segment (3a), the material which is further heated being separated in the separation stage (12, 13) of that heating zone from the stream of processing gas substantially by the effect of gravity, coupled with the effect of centrifugal force, and then being introduced directly into the clinker combustion zone (4).

2. Method according to claim 1, characterised in that the material which is heated to approximately from 850 to 900°C and calcined in the calcining zone (2), is heated in the heating zone (3) to a temperature in the order of from approximately 1200°C.

3. Method according to claim 1, characterised in that the stream of processing gas, charged with the calcined material, is diverted in a curved manner through at least 120°, preferably in the magnitude of approximately 180°, in the (each) separation stage (12, 13) of the heating zone (3), the material in the region of that diverting operation being separated from the stream of processing gas substantially by the effect of gravity in a widened separation element.

4. Method according to claim 3, characterised in that, in the connection between the ascending first processing segment (3a) and the descending second processing segment (3b) of the heating zone (3), a partial material separation is effected in an upper separation stage (13) with a diverting of flow through approximately 180° and a further material separation is effected in a lower separation stage (12) at the lower end of the second processing segment, the separated, heated material from both separation stages being introduced to the clinker combustion zone (4) and the stream of processing gas separated from the heated material being supplied to the calcining zone (2), with the flow of gas directed substantially upwards, and preferably being guided together beforehand with the exhaust gases from the clinker kiln (4) which similarly flow upwards.

5. Method according to claim 1, characterised in that, of the total combustion gas fuel requirement, there is supplied in a mutually variable manner - in percent by volume - approximately from 20 to 30%, preferably approximately 20% to the clinker combustion zone (4), approximately from 40 to 50% to the heating zone (3) and approximately from 30 to 40% to the calcining zone (2), at least the majority of the heated exhaust gases from the cooling zone (5) being used as combustion gases.

6. Method according to claim 5, characterised in that relatively high-grade fuel is supplied to the clinker combustion zone (4), whereas relatively low-grade, cost-effective secondary fuels are supplied to the heating zone (3) and the calcining zone (2).

7. Method according to claim 1, characterised in that a relatively short cylindrical rotary kiln (4), which functions according to the countercurrent principle, is used as the clinker combustion zone and the exhaust gases thereof are introduced into the calcining zone (2) and bypass the heating zone (3).

8. Method according to claim 7, characterised in that undesirable airborne constituents are removed from the exhaust gases of the cylindrical rotary kiln (4) and/or the heating zone (3) by at least one adjustable bypass guide (19, 20).

9. Method according to claim 1, characterised in that the heated material is burnt in the clinker combustion zone (4) until a free lime content of < 1% is achieved.

10. Apparatus for producing cement clinker from cement raw material, comprising
a) a preheater (1), through which hot gases flow, for preheating the raw material,
b) a calcining device (2), which is supplied with combustion air and additional fuel, for calcining the preheated material,
c) a heating device (3) which is likewise supplied with combustion air and fuel and which has ascending and descending processing segments (3a, 3b) and a separation device (12, 13) which is connected to a kiln (4) by means of a material discharge line (11),
d) a clinker kiln (4) which is operated with a countercurrent of material and processing gas and at whose clinker outlet end (4a) supply lines (8, 9) for fuel and combustion air are provided,
e) a cooling apparatus (5), which is connected to the clinker kiln (4), for cooling the burnt clinker (6), wherein
f) the cooling apparatus is connected to the clinker kiln (4), the heating device (3) and the calcining device (2) by partial exhaust air lines,
characterised by the following features:
g) a supply line (14) for calcined material and, at a single respective location, a fuel supply line (10) and a partial cooling exhaust air line (15) are connected as the sole combustion air supply line to the lower half of the ascending first processing segment (3a) of the heating device (3), which is produced in the form of an air stream reactor;
h) the separation device of the heating device (3) is formed with at least one stage in such a manner that the material which is further heated is separable from the stream of processing gas substantially by separation by gravity coupled with a centrifugal effect.

11. Apparatus according to claim 10, characterised in that the connection points for the supply line (14) of the calcined material, the combustion supply (10) and the partial cooling air line (15) are arranged separately from each other at the lower end portion of the ascending first processing segment (3a) of the heating device (3).

12. Apparatus according to claim 10, characterised in that the descending second processing segment (3b) opens out at its lower end approximately downwards into a spatially widened diverting portion (12a) of a lower separation stage (12) which has a lower outlet funnel (12b) for heated material, which is substantially separated by gravity, and a gas outlet connection (12c) for processing gas separated from the material, the diverting portion enclosing a curve of at least approximately 120° and the junction connection (12d) of the second processing segment (3b) and the gas outlet connection (12c) being provided at the ends of the curve which are arranged opposite each other and which are directed substantially upwards.

13. Apparatus according to claim 12, characterised in that the upper ends of the ascending first processing segment (3a) and the descending second processing segment (3b) are connected by an additional upper separation stage (13) which contains a spatially extended diverting portion (13a) which has an upper diverting curve of approximately 180° and which has downwardly directed connections (13b, 13c) for the two processing segments and which has a lower material outlet funnel (13d) which is connected to the inlet end (4a) of the clinker kiln (4) via a material line.

14. Apparatus according to claim 12, characterised in that the two processing segments (3a, 3b) of the heating device (3) are formed by tubular processing ducts, the associated partial cooling air line (15) opening directly into the lower end of the ascending first processing segment (3a), whereas the connection points for the supply line (14) of the calcined material and the fuel supply (10) are arranged above that junction point.

15. Apparatus according to claim 10, characterised in that quantity control adjustment valves are provided in the partial lines.

16. Apparatus according to claim 10, characterised in that there is arranged in the material supply line (14), which leads from the calcining device (2) to the heating device (3), a two-way gate (18) whose first path is connected to the heating device (3) and whose second path is connected to the inlet end (4b) of the clinker kiln (4) via a bypass line (14').

17. Apparatus according to claim 10, characterised in that the clinker kiln is formed by a relatively short cylindrical rotary kiln (4).

## Revendications

1. Procédé pour fabriquer un clinker de ciment à partir d'une farine crue de ciment, selon lequel on réalise un préchauffage de la farine crue dans une zone de préchauffage, on la calcine ensuite dans une zone de calcination, on chauffe à nouveau la matière calcinée dans une section de traitement montante et descendante ainsi que dans une zone de chauffage contenant au moins un étage de séparation, à une température se situant par exemple avant le début de la formation de la phase fondue, on achève la cuisson du matériau chauffé dans une zone de cuisson pour former le clinker, puis on refroidit le clinker chaud dans une zone de refroidissement, des quantités partielles de l'air chaud sortant de la zone de refroidissement étant envoyées en tant qu'air de combustion, conjointement avec les constituants combustibles, à la zone de cuisson du clinker, à la zone de chauffage et à la zone de calcination,
caractérisé en ce
que la partie formant combustible (10) et exclusivement la quantité partielle (15) d'air sortant de la zone de refroidissement (5) en tant qu'air de combustion sont envoyées, en dehors du matériau calciné, en un emplacement, à la section de chauffage (3) fonctionnant à la manière d'une zone de traitement à courant de vol, dans la zone de la moitié de la première section de traitement montante (3a), le matériau chauffé de façon supplémentaire dans l'étage de séparation (12, 13) de cette zone de chauffage étant séparé essentiellement sous l'action de la force de pesanteur, à laquelle est superposée l'action d'une force centrifuge, à partir du courant de gaz de traitement et étant introduite ensuite directement dans la zone (4) de cuisson du clinker.

2. Procédé selon la revendication 1, caractérisé en ce que le matériau chauffé entre environ 850 et 900°C et calciné dans la zone de calcination (2) est chauffé dans la zone de chauffage (3) au niveau de températures approximativement de 1200°C.

3. Procédé selon la revendication 1, caractérisé en ce que le courant de gaz de traitement chargé par le matériau calciné est dévié selon un coude sur au moins 120° et de préférence au voisinage d'environ 180° dans l'étage (chaque étage) de séparation (12,13) de la zone de chauffage (3), le matériau étant séparé dans la zone de cette déviation dans une partie élargie de séparation essentiellement sous l'action de la force de pesanteur à partir du courant de gaz de traitement.

4. Procédé selon la revendication 3, caractérisé en ce que dans la liaison entre la première section de traitement montante (3a) et la seconde section totalement descendante (3b) de la zone de chauffage (3), une séparation partielle de matériau est réalisée dans un étage supérieur de séparation (13) avec une déviation du courant d'environ 180° et au niveau de l'extrémité inférieure de la seconde section de traitement, une autre séparation de matériau est réalisée dans un étage inférieur de séparation (12), le matériau chauffé et séparé des deux étages de séparation étant introduit dans la zone (4) de cuisson du clinker, tandis que le courant de gaz de traitement, séparé du matériau chauffé, est envoyé à la zone de calcination (2) dans le cas où le courant de gaz est dirigé essentiellement vers le haut, et de préférence est réuni auparavant aux gaz de sortie, qui circulent également selon un mouvement ascendant et sortent du four (4) de cuisson du clinker.

5. Procédé selon la revendication 1, caractérisé en ce que, d'une manière rapportée à un pourcentage en volume - environ 20 à 30 %, de préférence environ 20 % du besoin total en gaz de combustion - combustible sont envoyés à la zone de chauffage (3) et environ 30 à 40 % sont envoyés à la zone de calcination (2), au moins la partie principale des gaz d'échappement chauds sortant de la zone de refroidissement (5) étant utilisée en tant que gaz de combustion.

6. Procédé selon la revendication 5, caractérisé en ce qu'un combustible ayant une qualité relativement élevée est envoyé à la zone (4) de cuisson du clinker, tandis que des combustibles secondaires de moindre qualité et bon marché sont envoyés à la zone de chauffage (3) et à la zone de calcination (2).

7. Procédé selon la revendication 1, caractérisé en ce qu'on utilise comme zone de cuisson du clinker un four rotatif tubulaire relativement court (4), qui travaille à contre-courant et dont les gaz de sortie sont introduits dans la zone de calcination (2), en contournant la zone de chauffage (3).

8. Procédé selon la revendication 7, caractérisé en ce que des composants volatils indésirables sont évacués des gaz de sortie du four tubulaire rotatif (4) et/ou de la zone de chauffage (3), au moyen d'un guidage de by-pass réglable (19,20).

9. Procédé selon la revendication 1, caractérisé en ce que le matériau chauffé est brûlé dans la zone (4) de cuisson du clinker pour atteindre une teneur en chaux libre < 1 %.

10. Installation pour fabriquer un clinker de ciment à partir d'une farine crue de ciment, comportant
a) un dispositif de préchauffage (1) qui est parcouru par des gaz chauds et sert à préchauffer la farine crue,
b) un dispositif de calcination (2) alimenté par de l'air de combustion et un combustible supplémentaire pour calciner le matériau préchauffé,
c) un dispositif de chauffage (3) également alimenté par de l'air de combustion et un combustible et qui possède des sections montante et descendante de traitement (3a, 3b) ainsi qu'un dispositif de séparation (12,13), qui est raccordé à un four de combustion (4) par l'intermédiaire d'une canalisation (11) d'évacuation du matériau,
d) un four (4) de combustion du clinker, qui fonctionne à contre-courant entre le matériau et le gaz de traitement et à l'extrémité (4a) de sortie du clinker duquel sont présentes des canalisations (8,9) d'amenée du combustible et de l'air de combustion,
e) un dispositif de refroidissement (5) relié au four (4) de combustion du clinker et servant à refroidir le clinker brûlé (6),
f) le dispositif de refroidissement est relié par des canalisations de transfert partiel de l'air sortant au four (4) de combustion du clinker, au dispositif de chauffage (3) et au dispositif de calcination (2),
caractérisée par les caractéristiques suivantes :
g) une canalisation (14) d'amenée du matériau calciné est raccordée à la moitié inférieure de la première section de traitement montante (3a) du dispositif de chauffage (3) agencé à la manière d'un réacteur à courant de vol et une canalisation (10) d'amenée du combustible et une canalisation (15) d'évacuation partielle de l'air sortant du dispositif de refroidissement sont raccordées, sous la forme d'une canalisation unique d'amenée de l'air de combustion respectivement en un emplacement;
h) le dispositif de séparation du dispositif de chauffage (3) est agencé de manière à comporter au moins un étage de sorte que le matériau, qui est chauffé d'une manière supplémentaire, peut être séparé du courant de gaz de traitement au moyen d'une séparation due à la force de pesanteur, à laquelle est superposée l'action de la force centrifuge.

11. Installation selon la revendication 10, caractérisée en ce que les points de raccordement pour la canalisation (14) d'amenée du matériau calciné, pour la canalisation (10) d'amenée du combustible et la canalisation (15) d'amenée partielle de l'air de refroidissement sont disposés en étant séparés les uns des autres au niveau de l'extrémité inférieure de la première section de traitement montante (3a) du dispositif de chauffage (3).

12. Installation selon la revendication 10, caractérisée en ce que la seconde section montante de traitement (3b) débouche, par son extrémité inférieure, approximativement à partir du haut dans une section de renvoi (12a) élargie spatialement d'un étage inférieur de séparation (12), qui comporte une trémie inférieure d'évacuation (12b) pour le matériau chauffé, séparé essentiellement par la force de pesanteur, et un raccordement (12c) d'évacuation du gaz pour le gaz de traitement séparé du matériau, la section de renvoi faisant un coude d'au moins environ 120°, et le raccord d'embouchure (12a) de la seconde section de traitement (3b) et le raccord (12c) d'évacuation du gaz étant prévus sur les extrémités réciproquement opposées du coude, qui sont dirigées essentiellement vers le haut.

13. Installation selon la revendication 12, caractérisée en ce que les extrémités supérieures de la première section de traitement montante (3a) et de la deuxième section de traitement descendante (3b) sont reliées par un étage de séparation supérieure supplémentaire (13), qui contient une section de renvoi (13a), qui possède un coude supérieur de déviation d'environ 180° et est élargi spatialement et possède des raccords (13b, 13c) dirigés vers le bas pour les deux sections de traitement ainsi qu'une trémie inférieure (13b) de sortie du matériau, qui est reliée par l'intermédiaire d'une canalisation du matériau à l'extrémité d'entrée (4a) du four (4) de cuisson du clinker.

14. Installation selon la revendication 12, caractérisée en ce que les deux sections de traitement (3a,3b) du dispositif de chauffage (3) sont formées par des canaux de traitement tubulaires, la canalisation associée (4) d'amenée partielle de l'air de refroidissement débouchant directement dans l'extrémité inférieure de la première section de traitement montante (3a), tandis que les zones de raccordement pour la canalisation d'amenée (14) du matériau calciné et la canalisation (10) d'amenée du combustible sont disposées au-dessus de cette zone d'embouchure.

15. Installation selon la revendication 10, caractérisée en ce que des volets de réglage de quantité sont prévus dans les canalisations d'amenée partielle.

16. Installation selon la revendication 10, caractérisée en ce que la canalisation (14) d'amenée du matériau, qui s'étend du dispositif de calcination (2) jusqu'au dispositif de chauffage (3), est disposé un aiguillage à deux branches (18), dont la première branche est reliée au dispositif de chauffage (3) et dont la seconde branche est reliée par l'intermédiaire d'une canalisation de déviation (14') à la seconde extrémité d'entrée (4b) du' four (4) de cuisson du clinker.

17. Installation selon la revendication 10, caractérisée en ce que le four de cuisson du clinker est formé par un four tubulaire rotatif (4) relativement court.
